# EUROPEAN PATENT SPECIFICATION

(11) **EP 1 650 848 B1**
(45) Date of publication and mention of the grant of the patent: **28.09.2011**
(21) Application number: 05022556.4
(22) Date of filing: 17.10.2005
(51) Int. Cl.: H02J 7/14

(54) **Voltage regulator for magnetogenerators protected against erroneous connections**
Spannungsregler für vor falschen Anschlüssen geschütze Magnetogeneratoren
Régulateur de tension pour magnétogénératrices protegèes contre des connexions erronées

(30) Priority: 19.10.2004 IT MI20041979
(43) Date of publication of application: 26.04.2006
(73) Proprietor: DUCATI ENERGIA S.p.A., 40132 Bologna (IT)
(72) Inventor: Regazzi, Gianni, 40050 Funo Di Argelato (BO) (IT); Baldoni, Beniamino, 40129 Bologna (IT)
(74) Representative: Brunacci, Marco

(56) References cited:
- WO-A1-02/49184
- US-A- 3 930 197
- US-A- 4 701 692
- US-B1- 6 181 111

## Description

This invention relates to a voltage regulator protected against erroneous connections, for voltage generators of permanent magnet type, also referred to as magnetogenerators, which are normally used with small combustion engines or for other stationary applications.

In combustion engines for stationary applications, as can be motor pumps, welding machines, and the like, use is prevalently made of magnetogenerators combined with a voltage regulator for recharging a battery and for supplying electric loads in general.

Due to the particularity and variety of the applications and ultimate users for whom such devices are intended, there is a strong probability of erroneous connections between the regulator and the battery, resulting in a consequent permanent damage of the regulator and/or the voltage generator, or in a simple blowout of a protective fuse.

Since the ultimate apparatuses are primarily destined to be used in the agriculture field, also in localities at a considerable distance from towns and villages, any repairs or even simply on-the-spot replacement of the fuse, can represent a serious problem with regard to finding the material and the required time.

For all these reasons and for these applications, the voltage regulators, in addition to ensuring a high degree of reliability, must also offer protection against incorrect insertions and short circuits, such as for example a reverse connection of the battery.

Document US 3 930 197 discloses a voltage regulator for charging a battery by a permanent magnet generator, comprising a semiconductor rectifier bridge. The controlled rectifiers of said bridge are connected between the generator and the positive terminal of the battery and they are switched by a switching circuit.

### OBJECTS OF THE INVENTION

The aim of this invention is to provide a single-phase voltage regulator of series-type, with protections and indications of erroneous connections, capable of achieving the following scopes:
protection against a reverse connection of the battery, to the voltage regulator, also during running of the magnetogenerator and in the presence of inductive loads, without blowout of the protective fuse;
protection against over-voltages at the output of the regulator, on the positive terminal for the battery, when the battery is disconnected;
warning by means of a single two-colour LED, indicating that the battery is not connected, or is connected with reversed polarities.

### BRIEF DESCRIPTION OF THE INVENTION

The above can be achieved by means of a voltage regulator according to claim 1.

More in particular, according to the invention a series-type voltage regulator has been provided, for a voltage magnetogenerator, suitable for supplying an electric load and for charging a battery, the voltage regulator comprising a semicontrolled rectifier bridge having a first and a second branch, each provided with a controlled rectifier device connected between a terminal of the voltage generator and a positive terminal for the battery; and an ON-OFF switching circuit for the rectifier devices, characterised in that said switching circuit comprises, for each rectifier device, a unidirectional electronic switch connected to a control electrode of a respective rectifier device, said electronic switch having a control electrode connected to a biasing circuit directly connected to the positive terminal of the battery, and by comprising a synchronising circuit for synchronising the ON-OFF switching of the rectifier devices, with the voltage at the terminals of the voltage generator.

Further features of the voltage regulator are defined by the dependent claims.

### BRIEF DESCRIPTION OF THE DRAWINGS

The voltage regulator, according to the invention, and its working will be described in greater detail hereunder, with reference to the example of the drawings, in which:
Fig. 1 shows a general wiring diagram of the voltage regulator;
Fig. 2 shows a wiring diagram of the circuit for supplying power to a block indicating erroneous connections of the battery.

### DETAILED DESCRIPTION OF THE INVENTION

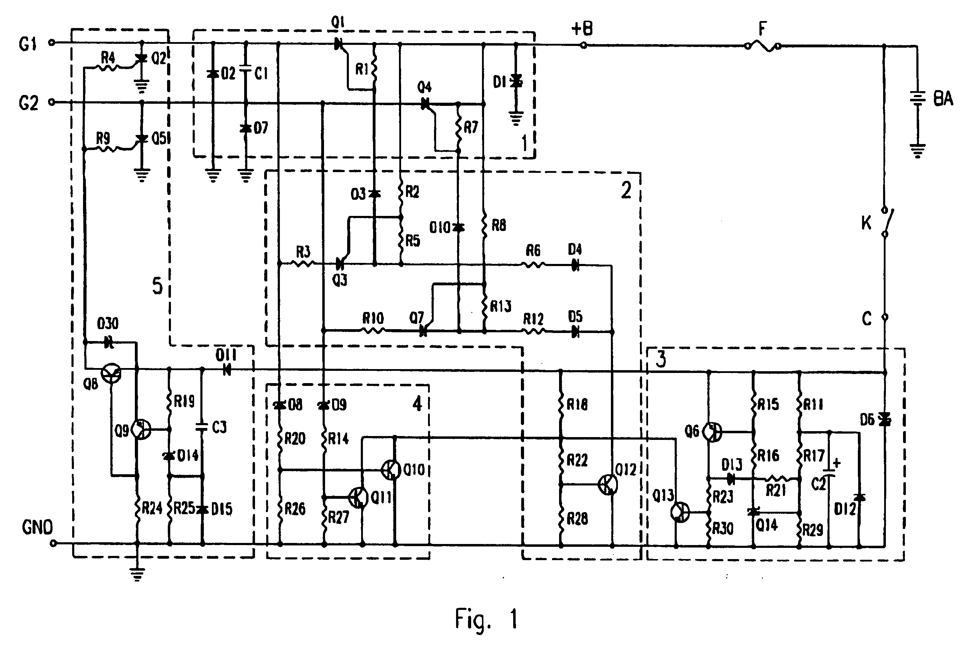

The wiring diagram of fig. 1 shows the connections to the terminals G1 and G2 of a voltage generator of permanent magnet-type, also referred to as magnetogenerator, the connection to the positive terminal B of the battery BA, the negative terminal GND and to an auxiliary terminal C which in turn is connected to the positive terminal B of the battery BA by means of a contact K which can be actuated by means of an ignition key of a combustion engine, not shown.

In the series-type voltage regulator various functional blocks can be distinguished, and namely: a first power block 1 comprising a double-wave rectifier, consisting of two power diodes D2, D7 on the two branches of the bridge connected to the ground and two controlled rectifier devices, or power SCR Q1, Q4, provided in the two branches of the rectifier bridge connected between the two terminals G1 and G2 of the magnetogenerator, and the positive terminal B for the battery BA; references R1 and R7 have been used to indicate respective biasing resistances for the gates or control electrodes of Q1 and Q4. As a protection against over-voltages of this functional block 1, a bidirectional voltage suppressor D1 is branched off from the positive terminal B, while a capacitor C1, with relevant protective diode D7, is branched between the terminals G1 and G2 of the magnetogenerator.

A reference number 2 has been used to indicate a second block for the ON-OFF switching of the power SCR Q1 and Q4; the circuit 2 comprises two unidirectional electronic switches consisting of low-powered SCR Q3, Q7 with their respective biasing resistances R5, R13 for polarising the gates, the current limiting resistances R3, R10, R2, R6, R8, R12, the diodes D3 and D10 for switching the power SCR Q1 and Q4, and the diodes D4, D5 whose function is to protect against reverse connections of the battery BA, and lastly the transistor Q12 for controlling the switching circuit of the low-powered SCR Q3, Q7, with the respective biasing resistances of the voltage divider R18, R22, R28, connected to a voltage measuring block.

The voltage regulator of fig. 1 also comprises a third block 3 for measurement of the battery voltage, consisting of a programmable Zener diode Q14 as the voltage measuring element, a resistive measuring divider R11, R17, R29 with the filter capacitor C2, a protective diode D13 and a resistance R21 for the hysteresis on the battery voltage, a diode D12 for protection against a reverse connection of the battery, and the control transistors Q6, Q13 with the respective biasing resistances R15, R16 and R23, R30.

To protect this measuring block 3 against over-voltages, a bidirectional voltage suppressor D6 has been inserted on the terminal C.

The reference number 4 has been used to indicate a fourth block for synchronisation of the ON-OFF switching of the SCR Q1, Q4 with the voltage on terminals G1 and G2 of the voltage generator; the block 4 is composed of two Zener diodes D8, D9 for detecting the voltage of the magnetogenerator, the biasing resistances R20, R26, R14, R27, the transistors Q10 and Q11 for inhibiting the switching ON of the SCR Q3, Q7, whose emitter-collector circuit is connected to the voltage divider which polarises the base of Q12.

Lastly, the reference number 5 has been used to indicate a fifth block for protection against over-voltages on the positive terminal of the battery, at the output side of the voltage regulator, in the event of absence of the battery BA and presence of inductive loads; this block 5 comprises two controlled switches connected in anti-parallel, consisting of power SCR Q2, Q5 having in series to their respective gates, two current limiting resistances R4, R9 connected to a first transistor Q8 for controlling said SCR Q2, Q5, the base of which is polarised through the resistor R24, in series with the collector-emitter circuit of a further transistor Q9 for inhibiting the first transistor Q8, in turn polarised by the resistors R19, R25 through the Zener diode D14 for detecting the presence of the battery voltage; a time delay circuit comprises a capacitor C3 which delay the operation of Q9 of the polarisation circuit; the diodes D11, D15 are for protection against a reversion of the battery, while the protective Zener diode D30 in parallel with the emitter-collector circuit of Q8, switch ON the SCR Q2, Q5 when the voltage on terminal C rises beyond a given threshold value.

### Operation:

As mentioned previously, the voltage regulator comprises a semicontrolled rectifier, composed of the two power diodes D2, D7 and four power SCR Q1, Q2, Q4, Q5 as shown in the diagram in fig. 1.

The SCR Q1 and Q4 are switched by two low-powered SCR Q7 and Q3 which in turn are switched by a voltage directly from the battery BA, upon closure of the transistor Q12 when the programmable Zener diode Q14 and the transistors Q6, Q10, Q11, Q13 are inhibited.

This condition occurs when the voltage of the battery BA exceeds the value set by the resistive divider R11, R17, R29 on the value of the threshold voltage existing on the control terminal of the programmable Zener diode Q14, normally 2.5 Volts.

The capacitor C2 serves to obtain the average value of the battery voltage, while the diode D13 and the resistor R21 serve to create a hysteresis on the battery voltage in order to prevent oscillations between the inhibited and the conductive states of Q14.

The diode D12 serves as a protection for the programmable Zener diode Q14 in the event of a reverse connection of the battery.

The suppressors D1 and D6 which have a voltage value higher than the battery voltage value serve as a protection in the case of very high frequency voltage peaks, and before the intervention of the SCR Q2, Q5 in anti-parallel to the generator, as can occur at the disconnection of electric loads, or of the battery BA.

The capacitor C1 serves to limit the over-voltages which may arise on the terminals G1 and G2 of the voltage generator when the SCR are switched ON or OFF.

It can also be seen from the wiring diagram of fig. 1, which forms an integral part of this description, that the Zener diodes D8, D9 with a voltage value of about 5-10 Volts higher than the battery charging voltage, bring Q10, Q11 into conduction exclusively when the phase voltage at the terminals G1 and G2 of the magnetogenerator exceeds the voltage of the Zener diodes D8, D9 thus having the possibility of switching ON the SCR Q3, Q7 which, in turn switch ON the SCR Q1, Q4 within the voltage interval only included between the battery charging voltage BA and the voltage of the aforesaid Zener diodes D8, D9, thereby avoiding the switching of the SCR Q1, Q4 with very high no-load voltages of the generator, in order to avoid over-voltages on the electric loads.

Synchronisation is created between the no-load voltage of the magnetogenerator and the switching ON of the SCR Q1 and Q4 with considerable advantages in terms of reliability of the entire electrical voltage generating and regulating system.

Also in order to prevent over-voltages generated by the ON-OFF switching of the power SCR devices, the capacitor C1 has been branched between the terminals G1 and G2 of the generator, as mentioned previously.

A further characteristic of the voltage regulator of Fig. 1 is that, in the absence of the battery BA, the SCR Q3 and Q7 cannot be switched ON by the closure of the transistor Q12 without the source of voltage, and consequently not even the power SCR Q1 and Q4 can be activated; moreover, in the absence of the battery BA, the electric loads are isolated from the voltage generator.

The same effect applies also in the event of the battery BA being connected with reversed polarities. In this situation, since the suppressors D1, D6 are bidirectional, and with a voltage value higher than the rated value of the battery voltage, they cannot conduct current.

From what has been described, it ensues that the insertion of the battery with reversed polarities, even with the magnetogenerator in rotation, does not cause any damage to the voltage regulator, or to the magnetogenerator itself and there is no intervention of the fuse F which is normally provided on the positive pole B of the battery BA.

If, at the time of detachment of the battery BA from the regulator, one of the two SCR Q1, Q4 is in a conductive state, in order to prevent all the voltage of the generator from being discharged onto the electric loads, resulting in a probable damage caused by the over-voltage to the connected equipment, must come into operation the SCR Q2 and Q5 in anti-parallel to the terminals G1 and G2 of the generator, whose gates or control electrodes are activated by the Zener diode D30 which has a voltage of a few Volts higher than that of regulation of the battery BA.

During the interval of time which elapses between the detachment of the battery BA and the intervention of the SCR Q2 and Q5 in anti-parallel to the terminals G1 and G2 of the generator, in the region of 3-10 microseconds, the voltage on the loads is limited by the suppressors D1 and D6.

Said SCR Q2 and Q5, in anti-parallel to the generator, switch OFF when the current of the generator crosses zero value and remain switched OFF until the battery BA is re-connected correctly.

Under normal operating conditions, the battery voltage is higher than the voltage of the Zener diode D14 which could have, for example, a voltage of 5.6 Volts; therefore the transistor Q9 conducts, while Q8 is inhibited, and the SCR Q2, Q5 in anti-parallel with respect to the terminals G1 and G2 of the generator cannot be activated by the battery voltage which is present on the emitter of Q8 from the terminal C, through the diode D11 which prevents the circulation of the current in the event of a reverse connection of the battery polarities.

If, at the time of disconnection of the battery BA from the regulator, inductive loads remain inserted and at that precise instant one of the two SCR Q1, Q4 is in a conductive state, then the current in the SCR Q1 or Q4 may never reach zero value, maintaining it constantly in a conductive state.

In this situation, all the voltage of the generator would be discharged onto the electric loads, with consequent damage caused by over-voltage to the electric loads themselves.

In the situation of the battery BA being disconnected and inductive loads connected, the voltage at the output of the regulator on terminals B and C is alternate, due to the presence of the inductance of the loads.

The SCR Q2, Q5 in anti-parallel to the terminals of the generator are switched ON by a command on the gate terminals by means of the resistors R4, R9, as soon as the voltage crossing the zero value, from negative to positive, polarises the base of the transistor Q8 through the resistor R24, thereby allowing the passage of the current from the emitter to the collector of Q8 until the output voltage on the terminals B and C exceeds the voltage of the Zener diode D14, putting the transistor Q9 in conduction; Q9 in turn will inhibit Q8 only after the SCR Q2 and Q5 have been switched ON.

The switched ON condition of Q2 and Q5 remains until the current in the inductive loads has been reduced to zero after which, since the SCR Q1, Q4 are no longer in a conductive state the electric loads are isolated from the generator.

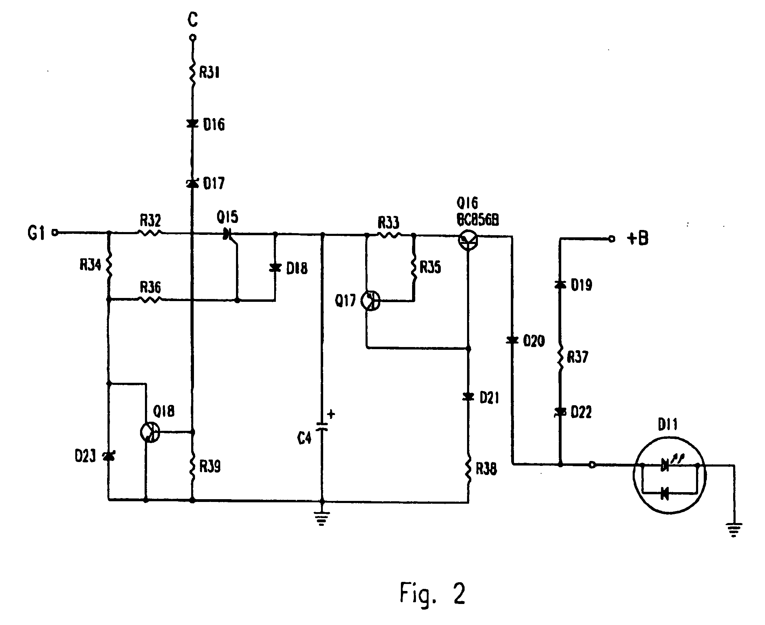

In order to visually indicate any possible erroneous connections of the battery, a description is given of a sixth indicator block shown in fig. 2; the block consists of a power supply system comprising a SCR Q15 for low currents, positively polarised on the control electrode by the resistors R34, R36 and protected against negative polarisations by the diode D18, and a feeding capacitor C4 charged by said SCR Q15 through the current limiting resistor R32 and limited in voltage by the Zener diode D23.

Reference Q18 has been used to indicate a transistor for inhibiting the power supply polarised by means of the resistors R31, R39 and by the Zener diode D17 for detecting the presence of the battery voltage, and by the diode D16 for protection against a reverse connection of the battery.

Further diodes for protection against a reverse connection of the battery are the diodes D19, D20, D21 and a further Zener diode D22 for detecting the presence of the battery.

Two transistors Q16, Q17 connected to the resistor R33 for measuring the current and to the biasing resistors R35, R38 constitute a current generator for supplying power to the LED diode D11.

With reference to fig. 2, a description will now be given of the functioning of the indicator system to be combined with the voltage regulator, for indicating the situation of battery disconnected and the situation of battery connected with reversed polarities.

This type of indication takes place on the only two-colour LED, indicated as D11 in Fig. 2. This type of LED changes colour, for example red and green, in relation to the fact that the current passes through said LED in either direction.

In the case of a normally connected battery, the voltage present on terminal C definitely exceeds the voltage of the Zener diode D17 typically 5.6 Volts, and bias or polarises the base of the transistor Q18 whose collector is closed to ground, preventing the switching ON of the SCR Q15 which together with the large-capacity capacitor C4, for example 1000 microfarads, constitutes the power supply of the indicator system.

In this situation, since there is no voltage on the capacitor C4, the LED diode D11 cannot be powered in any way whatsoever and will be switched OFF.

This situation with the LED D11 not lighted, corresponds to the situation of normal operation.

If the battery is not connected, then the transistor Q18 is inhibited and the SCR Q15 is switched ON by means of the resistors R34 R36, connecting one of the two terminals G1 and G2 of the generator to the capacitor C4 and charging it up to the voltage of the Zener diode D23, for example 5.6 Volts.

The diodes D20 and D21 serve to prevent the circulation of current when the battery is reversely connected.

The transistors Q16 and Q17 together with the resistors R33, R35 and R38 constitute a generator of a current whose value is given by the base-emitter threshold voltage of Q17, divided by the value of R33.

This current, due to the presence of the Zener diode D22 with a voltage equivalent to or higher than that of the Zener diode D23, will flow through D11, lighting it for example with a red colour.

In the case of the battery inserted with reversed polarities and the voltage generator in a rotating condition, then the voltage of the battery, which now has its positive pole B connected to ground, will exceed the voltage of the Zener diode D22, allowing the passage of the current; therefore a current resulting from the difference between the currents which pass through the diodes D19 and D20, will flow through D11 which will remain lit with a green colour indicating a reversed connection of the battery.

If the generator is stationary and the battery is reversed, then there will only be the current which flow through the diode D19 and the LED D11 will remain green.

From what has been described and shown, it will be clear that a voltage regulator is provided for permanent magnet generators, protected against erroneous connections of the battery; other modifications or variations may be made to the entire regulator or to the individual functional blocks, without thereby deviating from the scope of the accompanying claims.

## Claims

1. A voltage regulator, of the series-type, for a voltage magnetogenerator, suitable for supplying an electric load and for charging a battery (BA), the voltage regulator comprising a semicontrolled rectifier bridge (D2, D7, Q1, Q4) having a first and a second branch, each provided with a controlled rectifier device (Q1; Q4) connected between a terminal (G1: G2) of the voltage generator and a positive terminal (B) for the battery (BA); and an ON-OFF switching circuit (2) for the rectifier devices, (Q1; Q4) **characterised in that** said switching circuit (2) comprises, for each rectifier device (Q1; Q4), a unidirectional electronic switch (Q3; Q7) connected to a control electrode of a respective rectifier device (Q1; Q4), said electronic switch (Q3; Q7) having a control electrode connected to a biasing circuit (R2, R5; R8, R13) directly connected to the positive terminal (B) of the battery (BA), and by comprising a synchronising circuit (4) for synchronising the ON-OFF switching of the rectifier devices (Q1; Q4), with the voltage at the terminals (G1; G2) of the voltage generator.

2. The voltage regulator according to claim 1, **characterised by** comprising a control transistor (Q12) for controlling the switching ON-OFF circuit (2) and in that the synchronising circuit comprises a Zener diode, branched off from each terminal (G1, G2) of the generator, in series with a voltage divider for polarising the base of a respective transistor (Q10, Q11) for inhibiting the control transistor (Q12).

3. The voltage regulator according to claim 1, **characterised by** comprising a protective circuit (5) for protection against over-voltages, in the absence of the battery (BA) and with an inductive load connected to the voltage regulator, said protective circuit (5) comprising a first and a second electronic power switch (Q2; Q5) connected in anti-parallel to respective terminals (G1; G2) of the voltage generator.

4. The voltage regulator according to claim 3, **characterised in that** the control electrodes of said electronic switches in anti-parallel (Q2; Q5) are connected to a control transistor (Q8) having the base-emitter circuit connected to an inhibiting transistor (Q9) for the aforesaid control transistor (Q8), whose base is connected to a polarising circuit (R19, D14, R25) comprising a Zener diode (D14) for detecting the presence of the battery voltage (BA).

5. The voltage regulator according to claim 4, **characterised by** comprising a time delay circuit comprising a capacitor (C3) connected in parallel to the polarising circuit (R19, D14, R25) of the inhibiting transistor (Q9) for the control transistor (Q8).

6. The voltage regulator according to claims 4 and 5, **characterised in that** the control transistor (Q8), and one of its control circuits (C2, Q9, R19, D14, R24, R25), are connected to an auxiliary terminal (C) of a circuit (3) for controlling the battery voltage (BA), by means of a protective diode (D11) for protection against a voltage reversion.

7. The voltage regulator according to claims 4 and 6, **characterised in that** a protective Zener diode (D30) is connected in parallel to the collector-emitter circuit of the control transistor (Q8), for switching ON the electronic switches in anti-parallel (Q2, Q5), upon exceeding a maximum voltage value, on the auxiliary terminal (C).

8. The voltage regulator according to claim 1, **characterised in that** the synchronising circuit (4) comprises: first and second inhibiting transistors (Q10; Q11) whose emitter-collector circuit is connected to the switching ON-OFF circuit (2) for the controlled rectifier devices (Q1; Q4); the base of each inhibiting transistor (Q10; Q11) being in turn connected to a respective circuit for detecting the of the voltage generator, comprising a Zener diode (D8; D9) branched off from a respective branch of the rectifier bridge which is connected to a terminal (G1; G2) of the voltage generator.

9. The voltage regulator according to claim 1, **characterised by** comprising a signalling circuit for the visual indication of erroneous connection of the battery (BA) to the voltage regulator, said signalling circuit comprising:
a two-colour LED diode connected to a terminal of the voltage generator by means of a feeding circuit conformed to allow a first visual indication of battery disconnected, by means of a first colour of the LED diode, and a second visual indication of battery connected with reversed polarities, by means of a second colour of the LED diode.

10. The voltage regulator according to claim 9, **characterised in that** the feeding circuit comprises: a first current generation circuit for supplying power to the LED diode (D11), in which a feeding capacitor (C4) is connected to a terminal (G1, G2) of the voltage generator by means of a positively polarised diode (Q15); and a branched off transistor (Q18) for inhibiting the feeding circuit, the base of said branched off transistor (Q18) being polarised by means of a Zener diode (D17) detecting the presence of the battery voltage (BA).

11. The voltage regulator according to claim 10, **characterised in that** the current generation circuit for supplying power to the LED diode (D11) comprises a measuring resistor (R33) connected to the LED diode (D11) by means of a diode (D20) and the emitter-collector circuit of a first transistor (Q16), the base of said first transistor (Q16) in turn being connected to the feeding capacitor (C4) by means of the collector-emitter circuit of a second transistor (Q17) polarised by the voltage drop on the measuring resistor (R33).

12. The voltage regulator according to claims 1 and 6, **characterised in that** a bidirectional suppressor diode (D1, D6), with a voltage value higher than the rated value of the battery (BA), is branched off from the positive terminal (B) and from the auxiliary terminal (C) of the voltage regulator.

## Patentansprüche

1. Spannungsregulierer des Reihentyps für einen Spannungs-Magnetogenerator, der eine elektrische Last versorgen und eine Batterie (BA) laden kann, wobei der Spannungsregulierer eine halbgesteuerte Gleichrichterbrücke (D2, D7, Q1, Q4) mit einem ersten und einem zweiten Zweig, wovon jeder mit einer gesteuerten Gleichrichtervorrichtung (Q1; Q4) versehen ist, die zwischen einen Anschluss (G1; G2) des Spannungsgenerators und einen positiven Anschluss (B) für die Batterie (BA) geschaltet ist; und eine EIN/AUS-Schaltschaltung (2) für die Gleichrichtervorrichtungen (Q1; Q4) umfasst, **dadurch gekennzeichnet, dass** die Schaltschaltung (2) für jede Gleichrichtervorrichtung (Q1; Q4) einen unidirektionalen elektronischen Schalter (Q3; Q7) umfasst, der mit einer Steuerelektrode einer entsprechenden Gleichrichtervorrichtung (Q1; Q4) verbunden ist, wobei der elektronische Schalter (Q3; Q7) eine Steuerelektrode besitzt, die mit einer Vorspannungsschaltung (R2, R5; R8, R13) verbunden ist, die direkt mit dem positiven Anschluss (B) der Batterie (BA) verbunden ist, und dass er eine Synchronisationsschaltung (4) umfasst, um das EIN/AUSSchalten der Gleichrichtervorrichtungen (Q1; Q4) mit der Spannung an den Anschlüssen (G1; G2) des Spannungsgenerators zu synchronisieren.

2. Spannungsregulierer nach Anspruch 1, **dadurch gekennzeichnet, dass** er einen Steuertransistor (Q12) zum Steuern der Schalt-EIN/AUS-Schaltung (2) umfasst und dass die Synchronisationsschaltung eine Zener-Diode umfasst, die von jedem Anschluss (G1, G2) des Generators abgezweigt ist und mit einem Spannungsteiler in Reihe geschaltet ist, um die Basis eines jeweiligen Transistors (Q10, Q11) vorzuspannen, um den Steuertransistor (Q12) zu sperren.

3. Spannungsregulierer nach Anspruch 1, **gekennzeichnet durch** eine Schutzschaltung (5) zum Schutz vor Überspannungen, wenn die Batterie (BA) nicht vorhanden ist und eine induktiven Last mit dem Spannungsregulierer verbunden ist, wobei die Schutzschaltung (5) einen ersten und einen zweiten elektronischen Leistungsschalter (Q2; Q5) umfasst, die zu jeweiligen Anschlüssen (G1; G2) des Spannungsgenerators antiparallel geschaltet sind.

4. Spannungsregulierer nach Anspruch 3, **dadurch gekennzeichnet, dass** die Steuerelektroden der elektronischen Schalter (Q2; Q5), die antiparallel geschaltet sind, mit einem Steuertransistor (Q8) verbunden sind, der eine Basis-Emitter-Schaltung besitzt, die mit einem Sperrtransistor (Q9) für den oben genannten Steuertransistor (Q8) verbunden ist, dessen Basis mit einer Vorspannungsschaltung (R19, D14, R25) verbunden ist, die eine Zener-Diode (D14) enthält, um das Vorhandensein der Batteriespannung (BA) zu detektieren.

5. Spannungsregulierer nach Anspruch 4, **gekennzeichnet durch** eine Zeitverzögerungsschaltung, die eine Kondensator (C3) umfaßt, der mit der Vorspannungsschaltung (R19, D14, R25) des Sperrtransistors (Q9) für den Steuertransistor (Q8) parallelgeschaltet ist.

6. Spannungsregulierer nach den Ansprüchen 4 und 5, **dadurch gekennzeichnet, dass** der Steuertransistor (Q8) und eine seiner Steuerschaltungen (C2, Q9, R19, D14, R24, R25) mit einem Hilfsanschluss (C) einer Schaltung zum Steuern der Batteriespannung (BA) mittels einer Schutzdiode (D11) zum Schutz vor einer Spannungsumkehr verbunden sind.

7. Spannungsregulierer nach den Ansprüchen 4 und 6, **dadurch gekennzeichnet, dass** eine Schutz-Zener-Diode (D30) zu der Kollektor-Emitter-Schaltung des Steuertransistors (Q8) parallelgeschaltet ist, um die elektronischen Schalter (Q2, Q5), die antiparallel geschaltet sind, bei Überschreiten eines maximalen Spannungswerts an dem Hilfsanschluss (C) durchzuschalten.

8. Spannungsregulierer nach Anspruch 1, **dadurch gekennzeichnet, dass** die Synchronisationsschaltung (4) umfasst:
einen ersten und einen zweiten Sperrtransistor (Q10; Q11), dessen Emitter-Kollektor-Schaltung mit der Schalt-EIN/AUS-Schaltung (2) für die gesteuerten Gleichrichtervorrichtungen (Q1; Q4) verbunden ist; wobei die Basis jedes Sperrtransistors (Q10; Q11) ihrerseits mit einer jeweiligen Schaltung zum Detektieren der Spannung des Spannungsgenerators verbunden ist, die eine Zener-Diode (D8; D9) umfasst, die von einem jeweiligen Zweig der Gleichrichterbrücke abgezweigt ist, die mit einem Anschluss (G1; G2) des Spannungsgenerators verbunden ist.

9. Spannungsregulierer nach Anspruch 1, **gekennzeichnet durch** eine Signalgebungsschaltung für die visuelle Anzeige einer fehlerhaften Verbindung der Batterie (BA) mit dem Spannungsregulierer, wobei die Signalgebungsschaltung umfasst:
eine zweifarbige LED-Diode, die mit einem Anschluss des Spannungsgenerators mittels einer
Versorgungsschaltung verbunden ist, die dazu ausgelegt ist, eine erst visuelle Anzeige der getrennten Batterie mittels einer ersten Farbe der LED-Diode zuzulassen und eine zweite visuelle Anzeige der mit umgekehrten Polaritäten angeschlossenen Batterie mittels einer zweiten Farbe der LED-Diode zuzulassen.

10. Spannungsregulierer nach Anspruch 9, **dadurch gekennzeichnet, dass** die Versorgungsschaltung umfasst:
eine erste Stromerzeugungsschaltung zum Zuführen von Leistung zu der LED-Diode (D11), in der ein Versorgungskondensator (C4) mit einem Anschluss (G1, G2) des Spannungsgenerators mittels einer positiv vorgespannten Diode (Q15) verbunden ist; und einen abgezweigten Transistor (Q18), um die
Versorgungsschaltung zu sperren, wobei die Basis des abgezweigten Transistors (Q18) mittels einer Zener-Diode, die das Vorhandensein der Batteriespannung (BA) detektiert, vorgespannt ist.

11. Spannungsregulierer nach Anspruch 10, **dadurch gekennzeichnet, dass** die Stromerzeugungsschaltung for die Zufuhr von Leistung zu der LED-Diode (D11) einen Messwiderstand (R33) umfasst, der mit der LED-Diode (D11) mittels einer Diode (D20) und der Emitter-Kollektor-Schaltung eines ersten Transistors (Q16) verbunden ist, wobei die Basis des ersten Transistors (Q16) ihrerseits mit dem Versorgungskondensator (C4) mittels der Kollektor-Emitter-Schaltung eines zweiten Transistors (Q17) verbunden ist, der durch den Spannungsabfall an dem Messwiderstand (R33) vorgespannt ist.

12. Spannungsregulierer nach den Ansprüchen 1 und 6, **dadurch gekennzeichnet, dass** eine bidirektionale Unterdrückungsdiode (D1, D6), deren Spannungswert höher ist als der Nennwert der Batterie (BA), von dem positiven Anschluss (B) und von dem Hilfsanschluss (C) des spannungsregulierers abgezweigt ist.

## Revendications

1. Un régulateur de tension, du type série, pour un générateur électrique à aimants permanents, apte à alimenter une charge électrique et à charger une batterie (BA), le régulateur de tension comprenant un pont redresseur demi-contrôle (D2, D7, Q1, Q4) ayant une première et une deuxième branche, chacune pourvue d'un dispositif redresseur contrôlé (Q1 ; Q4) connecté entre une borne (G1 ; G2) du générateur de tension et une borne positive (B) pour la batterie (BA), et un circuit de commutation ON-OFF (2) pour les dispositifs redresseurs (Q1 ; Q4) **caractérisé en ce que** ledit circuit de commutation (2) comprend, pour chaque dispositif redresseur (Q1 ; Q4), un interrupteur électronique (Q3 ; Q7) unidirectionnel connecté à une électrode de commande d'un dispositif redresseur respectif (Q1 ; Q4), ledit interrupteur électroniques (Q3 ; Q7) ayant une électrode de contrôle reliée à un circuit de polarisation (R2, R5 ; R8, R13) relié directement à la borne positive (B) de la batterie (BA), et **en ce qu'**il comprend un circuit de synchronisation (4) pour la synchronisation de la commutation ON-OFF des dispositifs redresseurs (Q1 ; Q4), avec la tension aux bornes (G1 ; G2) du générateur de tension.

2. Régulateur de tension selon la revendication 1, **caractérisée en ce qu'**il comprend un transistor de commande (Q12) pour contrôleur le circuit de commutation ON-OFF (2) et **en ce que** le circuit de synchronisation comprend une diode Zener, dérivée à partir de chaque terminal (G1, G2) du générateur, en série avec un diviseur de tension pour polariser la base d'un transistor respectif (Q10, Q11) pour inhiber le transistor de commande (Q12).

3. Régulateur de tension selon la revendication 1, **caractérisé en ce qu'**il comprend un circuit de protection (5) pour à protection contre les surtensions, en l'absence de la batterie (BA) et avec une charge inductive reliée au régulateur de tension, ledit circuit de protection (5) comprenant un premier et un deuxième interrupteur électronique (Q2 ; Q5) connectés en antiparallèle aux bornes respectives (G1 ; G2) du générateur de tension.

4. Régulateur de tension selon la revendication 3, **caractérisé en ce que** les électrodes de commande desdits interrupteurs électroniques (Q2 ; Q5) en antiparallèle sont connectés à un transistor de commande (Q8) ayant le circuit base-émetteur relié à un transistor inhibant (Q9) pour ledit transistor de commande (Q8), dont la base est connectée à un circuit de polarisation (R19, D14, R25) comprenant une diode Zener (D14) pour détecter la présence de la tension de la batterie (BA).

5. Régulateur de tension selon la revendication 4, **caractérisé en ce qu'**il comprend un circuit de temporisation comprenant un condensateur (C3) connecté en parallèle au circuit de polarisation (R19, D14, R25) du transistor inhibant (Q9) pour le transistor de commande (Q8).

6. Régulateur de tension selon les revendications 4 et 5, **caractérisé en ce que** le transistor de commande (Q8), et l'un de ses circuits de contrôle (C2, Q9, R19, D14, R24, R25), sont reliés à une borne auxiliaire (C) d'un circuit (3) pour contrôler la tension de la batterie (BA), avec une diode de protection (D11) pour la protection contre un retour de tension.

7. Régulateur de tension selon les revendications 4 et 6, **caractérisé en ce que** une diode Zener de protection (D30) est connectée en parallèle au circuit collecteur-émetteur du transistor de commande (Q8), pour commuter en ON les interrupteurs électroniques en antiparallèle (Q2, Q5), lors d'un dépassement d'une valeur de tension maximale, sur le terminal auxiliaire (C).

8. Régulateur de tension selon la revendication 1, **caractérisé en ce que** le circuit de synchronisation (4) comprend: des premiers et des deuxièmes transistors inhibant (Q10 ; Q11) dont le circuit émetteur-collecteur est relié au circuit de commutation ON-OFF (2) pour les dispositifs redresseurs (Q1 ; Q4) commandés, la base de chaque transistor inhibant (Q10 ; Q11) étant à son tour connectée à un circuit respectif pour détecter la tension du générateur, comprenant une diode Zener (D8 ; D9) dérivée à partir d'une branche respective du pont redresseur qui est reliée à un terminal (G1 ; G2) du générateur de tension.

9. Régulateur de tension selon la revendication 1, **caractérisé en ce qu'**il comprend un circuit de signalisation pour l'indication visuelle d'une connexion erronée de la batterie (BA) au régulateur de tension, ledit circuit de signalisation comprenant:
une diode LED bicolore connectée à un terminal du générateur de tension par le biais d'un circuit d'alimentation apte à permettre une première indication visuelle quand la batterie est débranchée, à l'aide d'une première couleur de la diode LED, et une deuxième indication visuelle quand la batterie est connectée avec les polarités inversées, à l'aide d'une deuxième couleur de la diode LED.

10. Régulateur de tension selon la revendication 9, **caractérisé en ce que** le circuit d'alimentation comprend: un premier circuit de génération de courant pour l'alimentation de la diode LED (D11), dans lequel un condensateur d'alimentation (C4) est connecté à un terminal (G1, G2) du générateur de tension à l'aide d'une diode polarisée positivement (Q15), et un transistor dérivé (Q18) pour inhiber le circuit d'alimentation, la base dudit transistor dérivé (Q18) étant polarisée par une diode Zener (D17) qui détecte la présence de la tension de batterie (BA).

11. Régulateur de tension selon la revendication 10, **caractérisé en ce que** le circuit de génération de courant pour l'alimentation de la diode LED (D11) comprend une résistance de mesure (R33) connectée à la diode LED (D11) par une diode (D20) et un circuit émetteur-collecteur d'un premier transistor (Q16), la base dudit premier transistor (Q16), étant à son tour reliée au condensateur d'alimentation (C4) par un circuit collecteur-émetteur d'un deuxième transistor (Q17) polarisé par la chute de tension sur la résistance de mesure (R33).

12. Régulateur de tension selon les revendications 1 et 6, **caractérisé en ce qu'**une diode Transil bidirectionnelle (D1, D6), avec une valeur de tension supérieure à la valeur nominale de la batterie (BA), est dérivée à partir de la borne positive (B) et à partir du terminal auxiliaire (C) du régulateur de tension.
